# EUROPEAN PATENT APPLICATION

(11) **EP 1 821 458 A1**
(43) Date of publication of application: **22.08.2007**
(21) Application number: 06753142.6
(22) Date of filing: 14.07.2006
(51) Int. Cl.: H04L 12/26, H04L 12/24

(54) **A METHOD, SYSTEM AND ACCESS CONTROL FUNCTION FOR TESTING THE EMERGENT SERVICE**

(30) Priority: 04.08.2005 CN 200510088999
(71) Applicant: Huawei Technologies Co Ltd, Longgang District Shenzhen 518129 (CN)
(72) Inventor: WU, Dongjun, Shenzhen Guangdong 518129 (CN)
(74) Representative: Manitz, Gerhart
(86) International application number: PCT/CN2006/001675
(87) International publication number: WO 2007/014511

(57) **Abstract**

A method for detecting an emergency service, applicable for a system including a UE, an Access Control Function (ACF) and a Routing Control Function (RCF) includes: determining, by an ACF, whether a call is an emergency call after receiving a call signaling from a UE; if the call is an emergency call, notifying, by the ACF, the RCF that the call is an emergency call. Embodiments of the present invention further disclose a system and an ACF. The solution provided by embodiments of the present invention makes it possible to detect the emergency service for scenarios involving different kinds of terminals.

## Description

### Field of the Invention

The present invention relates to the emergency service implementation technologies, more particularly, to a method, a system and an Access Control Function (ACF) for detecting an emergency service.

### Background of the Invention

An emergency service is to provide aid in the case of individual/public health, security, life or property encounters danger. A service bearer network is required to provide the emergency service with high priority and route an emergency call to a most appropriate Public Security Access Point (PSAP) according to geographical location information of an emergency caller. Then the PSAP transfers the emergency call to a most appropriate Emergency Call Center (ECC) according to the geographical location information of the emergency caller. The ECC is responsible for providing aid for the emergency caller as soon as possible.

The European Telecommunications Standards Institute (ETSI) provides an implementation of an emergency service in a Public Switched Telephone Network (PSTN)/Integrated Services Digital Network (ISDN) Emulator Subsystem (PES). The PES is a subsystem in a service layer of a Next Generation Network (NGN) architecture, and simulates a PSTN/ISDN network for a traditional terminal in the NGN network. Thus, a user equipped with the traditional terminal in the NGN may receive the same services from the NGN as that he/she previously received from the PSTN/ISDN without perceiving the transfer from the PSTN/ISDN to the NGN.

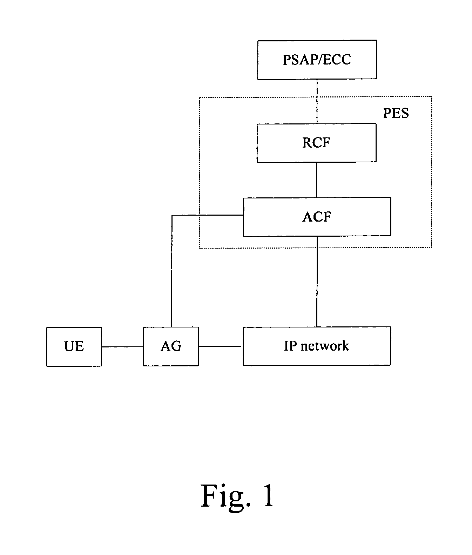

Fig. 1 is a schematic diagram illustrating a system structure for emergency service based on the PES. As shown in Fig. 1, the PES-based system for emergency service includes: a PES, a PSAP/ECC, an IP transmission network, an Access Gateway (AG) and a User Equipment (UE). The UE accesses the PES or the IP transmission network via the AG. The PES is respectively connected with the IP transmission network and the PSAP/ECC. Therefore, the PES may route an emergency call signaling from the UE to the PSAP/ECC to establish an emergency call. The AG may be a Media Gateway (MG) or a Gateway (GW). The PES includes an Access Control Function (ACF) and a Routing Control Function (RCF). The AG and the IP transmission network send the emergency call signaling of the UE to the ACF, and the ACF forwards the emergency call signaling to the RCF, then the RCF routes the emergency call signaling to the PSAP/ECC.

In addition, the ETSI also defines an IP Multimedia Subsystem (IMS)-based PES architecture. The IMS-based PES architecture mainly adds two functions on basis of the original IMS, i.e., a PSTN/ISDN emulation logic on an Application Server (AS) and an Access Gateway Control Function (AGCF) connected with Inquiry/Service-Call Session Control Function (I/S-CSCF). A Proxy-CSCF (P-CSCF) or the AGCF performs an access control function of the PES, and the I/S-CSCF implements call routing and control functions of the PES. Therefore, if the PES shown in Fig. 1 is the IMS-based PES, the ACF may be the P-CSCF or AGCF and the RCF may be the I/S-CSCF. In addition, the PSAP/ECC may directly access the PES through an IP-based Session Initiating Protocol (SIP). At this time, the PSAP/ECC may be viewed as the AS of the IMS. The PSAP/ECC may also be located in the PSTN/ISDN and access the PES via a Trunk Media Gateway Function (TMGF) and a Signaling Gateway Function (SGF). The PSAP/ECC may be located in the other IP networks and access the PES via an Inter-Border Control Function (IBCF). Since the manner for the PSAP/ECC to access the PES is irrelevant to the problem existing in the related art and the technical solution provided by embodiments of the present invention, only the SIP is taken as an example for the PSAP/ECC to access the PES.

To implement an emergency service in the PES, the PES must be able to detect an emergency call and provide a high priority service for the emergency call. The current scheme for detecting the emergency service in the PES follows that in the IMS. In the method for detecting the emergency service in the IMS, a UE has an ability of number analysis to detect the emergency call and supports SIP. When detecting an emergency call, the UE directly sends an SIP signaling carrying an emergency service indicator to the ACF. The ACF forwards the SIP signaling to the I/S-CSCF. Therefore, the I/S-CSCF may recognize the emergency service indicator and route the SIP signaling to the PSAP preferentially.

However, in a practical PES architecture, the UE is usually a traditional phone such as a PSTN terminal, and the call signaling of the UE is sent to the ACF via the AG. There exist several factors block the implementation of the IMS-based method in the PES architecture: 1. the UE may be incapable of number analysis, thus the UE cannot detect the emergency service; 2. the UE may not support the SIP, thus the signaling transmitted between the UE and the AG is not the SIP signaling, and the AG may also not support the SIP; in this case, the UE cannot transfer an emergency service indicator to the PES via the AG, thereby the PES is unable to detect the emergency service.

To sum up, the existing method for detecting the emergency service does not applicable for terminals with low capabilities in the IMS and for the PES in which the capability of the UE is relatively low, which makes it impossible to implement the emergency service in such IMS or PES.

### Summary of the Invention

Embodiments of the present invention provide a method for detecting an emergency service, applicable for a system including a User Equipment (UE), an Access Control Function (ACF) and a Routing Control Function (RCF).

The method for detecting an emergency service according to an embodiment of the present invention includes:
determining, by an ACF, whether a call is an emergency call after receiving a call signaling from a UE;
when the call is an emergency call, notifying, by the ACF, the RCF that the call is an emergency call.

Embodiments of the present invention also provide an emergency service system, including:
an ACF, configured to receive a call signaling from a UE, and send an emergency service indicator to an RCF after determining that the call signaling is an emergency service call;
the RCF, configured to route the call signaling received from the ACF to a Public Security Access Point/Emergency Call Center (PSAP/ECC) after receiving the emergency service indicator.

Embodiments of the present invention still provide an ACF for detecting an emergency service, including:
a call detection unit, configured to receive a call signaling from a UE, determine whether the call signaling is an emergency call, and send an emergency service indicator to the RCF if the call signaling is an emergency service all.

As can be seen from above, the ACF determines whether a call is an emergency service call; when it is determined that the call is an emergency service call, the ACF notifies the RCF that the call is an emergency service call.

Therefore, the method, system and ACF for detecting an emergency service provided by embodiments of the present invention may detect the emergency service for scenarios involving different kinds of UEs and is particularly applicable for the PES, requires less capability for the UE to implement the emergency service and provides a wide application for the emergency service. In addition, the method, system and ACF provided by embodiments of the present invention require less re-construction for the existing network, thereby is a feasible scheme to detect the emergency service.

### Brief description of the drawings

Fig. 1 is a schematic diagram illustrating a system structure for an emergency service based on the PES according to the related art.
Fig. 2 is a schematic diagram illustrating a method for detecting an emergency service according to an embodiment of the present invention.
Fig. 3 is a schematic diagram illustrating structures of a system and an ACF for detecting an emergency service according to an embodiment of the present invention.

### Detailed description of the invention

In the method for detecting an emergency service according to embodiments of the present invention, the ACF determines whether a call is an emergency call; when it is determined that the call is an emergency call, the ACF notifies the RCF that the call is an emergency call, so that the RCF may route the call signaling to the PSAP/ECC preferentially to implement an emergency service.

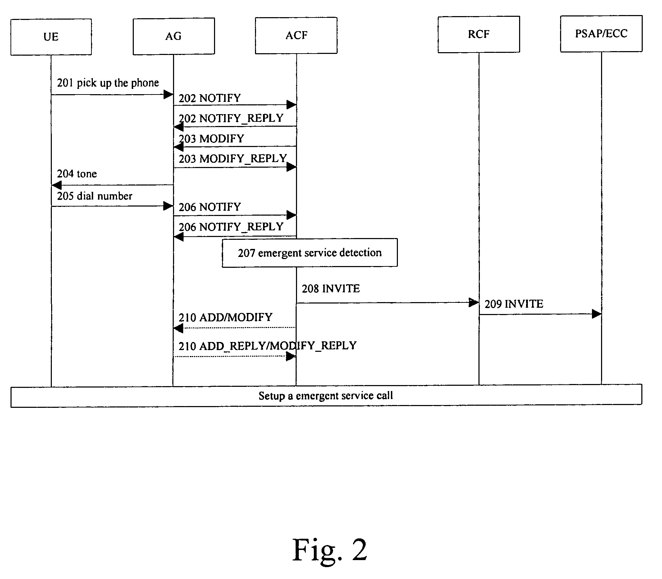

Fig. 2 is a schematic diagram illustrating a method for detecting an emergency service according to an embodiment of the present invention. In this embodiment, the UE is a PSTN terminal which sends the call signaling to the ACF via the AG As shown in Fig. 2, the method includes:
Block 201: the UE triggers an off-hook event to the AG.
Block 202: the AG sends an H.248 NOTIFY message to the ACF to notify the ACF of the pick-up event of the UE. The ACF returns an H.248 NOTIFY_REPLY message to the AG.
Block 203: the ACF sends an H.248 MODIFY message to the AG to indicate the AG to start receiving a number. The AG returns to the ACF an H.248 MODIFY_REPLY message carrying a Session Description Protocol (SDP) parameter to determine a media format supported by the AG.
Blocks 204-205: the AG sends to the UE a dialing tone. After hearing the dialing tone, the user starts to dial the number, and the UE sends the called number dialed by the user to the AG. If the call originated by the user is an emergency call, the called number is an emergency service number.
Block 206: after receiving the called number dialed by the user, the AG constructs an H.248 NOTIFY message for the UE and sends the H.248 NOTIFY message to the ACF; the NOTIFY message carries at least an identifier of the user, i.e. the identifier of the UE, and the called number. The ACF returns a NOTIFY_REPLY message to the AG.

The above blocks 201 to 206 are similar to the related art and are not described herein in detail.
Block 207: the ACF determines whether the call is an emergency call according to the NOTIFY message received in block 206; if the call is an emergency call, the ACF constructs an SIP INVITE message carrying an emergency service indicator; otherwise, the ACF constructs an INVITE message carrying no emergency service indicator.

The ACF may retrieve the called number from the NOTIFY message and determine whether the call is an emergency call by verifying whether the called number retrieved is a pre-stored emergency number. The processes of retrieving the called number from the NOTIFY message and verifying whether the called number is a pre-stored emergency number by the ACF may be implemented following the related art, which will not be described herein in detail.
Block 208: the ACF sends the INVITE message constructed in block 207 to the RCF.
Block 209: the RCF receives the INVITE message, and determines whether the INVITE message contains the emergency service indicator; if the INVITE message contains the emergency service indicator, routes the INVITE message to the PSAPIECC preferentially; otherwise, treats the INVEITE message as a common call. This block is the similar to the related art. Since the existing RCF has the ability of recognizing the emergency service indicator, the process of retrieving the emergency service indicator will not be described in detail. As can be seen from the background of the invention, the AG may be an MG or a GW; the ACF may be a P-CSCF or an AGCF; the RCF may be an I/S-CSCF.

In other embodiment, the ACF may further execute the following blocks while performing blocks 208 and 209.
Block 210: in response to detecting the emergency call, the ACF sends an H. 248 ADD message or MODIFY message carrying the emergency service indicator to the AG. The AG determines that the call is an emergency call according to the emergency service indicator carried in the H.248 ADD message or the MODIFY message, then assigns high priority resources for the emergency call. Then the AG returns an ADD_REPLY message or MODIFY_REPLY message to the ACF.

After the above blocks, entities such as the AG, the ACF and the RCF assign high priority resources and high priority service for the emergency call, so as to establish an emergency call between the UE and the PSAP/ECC.

The method of the embodiment is applicable for not only the PES communicatively connected with a PSTN terminal, but also the PES communicatively connected with other terminals such as an IP terminal, and also applicable for non-PES architecture such as IMS. Therefore the UE may be a PSTN terminal or an IP terminal, and the IP terminal may be an H.248 terminal or an SIP terminal. When the UE is an IP terminal, the UE may directly send the call signaling to the ACF. When the UE is a PSTN terminal, the UE needs to access the ACF via the AG supporting H.248 or SIP. In this embodiment, the UE is a PSTN terminal and the AG supports H.248. The method of the embodiments of the invention is applicable for any type of UEs and AGs supporting different kinds of protocols. The method of the embodiments of the invention will be described according to the type of the UE and the protocols that the AG supports respectively.
1. The UE is a PSTN terminal and the AG supports the SIP. Different from Fig. 2, SIP signaling is exchanged between the AG and the ACF. The call signaling sent to the ACF and constructed by the AG is an INVITE message carrying the called number, and the ACF determines whether the current call is an emergency call by retrieving the called number from the INVITE message constructed by the AG; likewise, the ACF may further notify the AG that the current call is an emergency call by carrying the emergency service indicator in the SIP signaling returned to the AG.
2. The UE is an SIP terminal. Different from Fig. 2, the SIP signaling is directly exchanged between the UE and the ACF. The call signaling sent to the ACF and constructed by the UE is an INVITE message carrying the called number, and the ACF determines whether the current call is an emergency call by retrieving the called number from the INVITE message.
3. The UE is an H.248 terminal. Different from Fig. 2, the H.248 signaling is directly exchanged between the UE and the ACF. The call signaling sent to the ACF and constructed by the UE is an NOTIFY message carrying the called number, and the ACF determines whether the current call is an emergency call by retrieving the called number from the NOTIFY message.

In the embodiment shown in Fig. 2, no matter the UE is a traditional phone terminal with low capability such as a PSTN terminal or an IP terminal with high capability, it is possible for the method of the embodiment to detect the emergency call successfully. As can be seen, the method of the embodiment is a generally applicable method which requires less re-construction of the existing network and has better operability.

Based on the above method for detecting an emergency service, another embodiment of the present invention further provides an emergency service system and an ACF for detecting an emergency service.

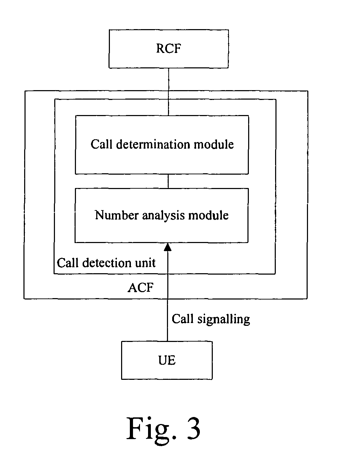

Fig. 3 is a schematic diagram illustrating structures of a system and an ACF for detecting an emergency service according to an embodiment of the present invention.

As shown in Fig. 3, the system includes: a UE, an ACF and an RCF. The ACF is configured to receive a call signaling from the UE, and send an emergency service indicator to the RCF after determining that the call signaling is an emergency call. The ACF may include a call detection unit configured to detect the emergency call. The RCF is configured to preferentially route the call signaling to the PSAP/ECC after receiving the emergency service indicator. In the system provided by the embodiments of the present invention, the ACF may be a P-CSCF or an AGCF; the RCF may be an I/S-CSCF.

As shown in Fig. 3, a call detection unit is added in the ACF. The call detection unit receives a call signaling from the UE, determines whether the call signaling is an emergency call, and indicates the RCF whether the current call is an emergency call. Only the process relevant to the emergency service detection is illustrated herein, other existing units in the ACF are not shown in Fig. 3. The call signaling sent by the UE via the AG may be from the UE directly or via the AG.

The call detection unit may further include a number analysis module and a call determination module. The number analysis module receives a call signaling from the UE, retrieves the called number from the call signaling and sends the called number to the call determination module. The call determination module determines whether the current call is an emergency call by verifying whether the called number retrieved is a pre-stored emergency number. When determining that the current call is an emergency call, the call determination module outputs an emergency service indicator, and the ACF carries the emergency service indicator in the call signaling and sends the call signaling carrying the emergency service indicator to the RCF. Therefore, the RCF may determine whether the current call is an emergency call by verifying whether the call signaling received carries the emergency service indicator. The number analysis module may receive the call signaling from the UE through existing function modules of the ACF. And an existing module in the ACF for sending the call signaling to the RCF is further configured to receive the emergency service indicator from the number determination module and carries the emergency service indicator in the call signaling to output. Since the process of receiving or transmitting the call signaling by the existing modules in the ACF does not belong to the scope of the present invention, the process will not be described herein.

In other embodiments, the number analysis module and the call determination module may be independent functions in the ACF or integrated with other existing modules in the ACF, and may be implemented by software or hardware, which is not limited herein.

To sum up, the method, system and ACF in accordance with the embodiments of the present invention may implement emergency service detection for scenarios involving different kinds of UEs. Through adding a number analysis function and an emergency service detection function in the ACF, the solution provided by the embodiments of the present invention requires less capability for the UE, which is favorable for the wide spread of the emergency service and especially applicable for the PES architecture. In addition, the solution provided by the embodiments of the present invention requires less re-construction for the existing network and has better operability.

## Claims

1. A method for detecting an emergency service, comprising:
determining, by an Access Control Function (ACF), whether a call is an emergency call if receiving a call signaling from a User Equipment (UE); and
when the call is an emergency call, notifying, by the ACF, a Routing Control Function (RCF) that the call is an emergency call.

2. The method of claim 1, wherein,
the UE is a PSTN terminal; and
the ACF receives the call signaling from the UE via an Access Gateway (AG).

3. The method of claim 2, further comprising:
notifying, by the ACF, the AG that the call is an emergency call, when the ACF determines the call is an emergency call.

4. The method of claim 3, wherein the ACF notifies the AG that the call is an emergency call via sending a call signaling carrying an emergency service indicator to the AG.

5. The method of any one of claims 2 to 4, wherein the ACF is a Proxy-Call Session Control Function (P-CSCF) or an Access Gateway Control Function (AGCF); the AG is a Media Gateway (MG) or a Gateway (GW); and the call signaling sent by the ACF to the AG is an H.248 signaling or a Session Initiating Protocol (SIP) signaling.

6. The method of claim 1, wherein the UE is an Internet Protocol (IP) terminal; and the ACF receives the call signaling directly from the UE.

7. The method of claim 6, wherein the ACF is a P-CSCF or an AGCF;
when the UE is an SIP terminal, the call signaling received by the ACF is an SIP signaling; and
when the UE is an H.248 terminal, the call signaling received by the ACF is an H.248 signaling.

8. The method of claim 1, wherein the determining whether the call is an emergency call comprises:
retrieving, by the ACF, a called number from the call signaling received, and determining whether the call is an emergency call by verifying whether the called number is a pre-stored emergency number.

9. The method of any one of claims 1 to 4 and 6 to 8, wherein the notifying the RCF that the call is an emergency call comprises:
carrying, by the ACF, an emergency service indicator in the call signaling forwarded to the RCF.

10. The method of claim 9, wherein the ACF is a P-CSCF or an AGCF; the RCF is an Inquiry/Service-Call Session Control Function (I/S-CSCF); and the call signaling forwarded by the ACF to the RCF is an SIP signaling.

11. An emergency service system, comprising:
an Access Control Function (ACF), configured to receive a call signaling from a User Equipment (UE), and send an emergency service indicator to a Routing Control Function (RCF) after determining that the call signaling is an emergency service call;
the RCF, configured to route the call signaling received from the ACF to a Public Security Access Point/Emergency Call Center (PSAP/ECC) after receiving the emergency service indicator.

12. The system of claim 11, wherein the ACF comprises:
a call detection unit, configured to for receiving the call signaling from the UE, determine whether the call signaling is an emergency call and send an emergency service indicator to the RCF.

13. The system of claim 12, wherein the call detection unit comprises:
a number analysis module, configured to receive the call signaling from the UE, retrieve a called number from the call signaling and send the called number;
a call determination module, configured to receive the called number from the number analysis module, determine whether the call is an emergency call by verifying whether the called number is a pre-stored emergency number, and send the emergency service indicator to the RCF.

14. The system of claim 13, wherein the number analysis module and the call determination module are implemented as independent functions within the ACF or integrated with existing functions of the ACF.

15. The system of any one of claims 11 to 14, wherein the ACF is a Proxy-Call Session Control Function (P-CSCF) or an Access Gateway Control Function (AGCF); the RCF is an Inquiry/Service-Call Session Control Function (I/S-CSCF).

16. An Access Control Function (ACF) for detecting an emergency service, comprising:
a call detection unit, configured to receive a call signaling from a User Equipment (UE), determine whether the call signaling is an emergency call, and send an emergency service indicator to a Routing Control Function (RCF).

17. The ACF of claim 16, wherein the call detection unit comprises:
a number analysis module, configured to receive the call signaling from the UE, retrieve a called number from the call signaling and send the called number;
a call determination module, configured to receive the called number from the number analysis module, determine whether the call is an emergency call by verifying whether the called number is a pre-stored emergency number, and send the emergency service indicator to the RCF.

18. The ACF of claim 17, wherein the number analysis module and the call determination module are implemented as independent functions within the ACF or integrated with existing functions of the ACF.

19. The ACF of any one of claims 16 to 18, wherein the ACF is a Proxy-Call Session Control Function (P-CSCF) or an Access Gateway Control Function (AGCF).
